# NEUE EUROPÄISCHE PATENTSCHRIFT

(11) **EP 1 754 764 B2**
(45) Veröffentlichungstag und Bekanntmachung des Hinweises auf die Entscheidung über den Einspruch: **04.10.2017**
(45) Hinweis auf die Patenterteilung: 09.12.2009
(21) Anmeldenummer: 06016956.2
(22) Anmeldetag: 14.08.2006
(51) Int. Cl.: C09J 7/04

(54) **Verwendung eines Klebebandes zum Umwickeln eines Kabelbündels**
Use of an adhesive tape for covering cable bundles
Utilisation d'un ruban adhésif pour enrober des faisceaux de câbles

(30) Priorität: 16.08.2005 DE 202005013009 U
(43) Veröffentlichungstag der Anmeldung: 21.02.2007
(73) Patentinhaber: certoplast Technische Klebebänder GmbH, 42285 Wuppertal (DE)
(72) Erfinder: Mundt, Stefan Dr., 40789 Monheim am Rhein (DE)
(74) Vertreter: Nunnenkamp, Jörg

(56) Entgegenhaltungen:
- WO-A-00/20201
- WO-A-2005/085379
- WO-A1-03/033611
- DE-U1- 29 510 907
- DE-U1- 29 823 462
- US-B1- 6 790 505

## Beschreibung

Die Erfindung betrifft die Verwendung eines Klebebandes mit wenigstens einem textilen Träger aus zumindest einer Gewebeschicht und einer damit verbundenen Flächengebildeschicht aus jeweils Fasern, und mit einer ein- oder beidseitig auf den Träger aufgebrachten Kleberbeschichtung zum Umwickeln eines Kabelbündels. - Bei dieser Kleberbeschichtung handelt es sich im Allgemeinen um eine Haftklebstoffbeschichtung.

Solche Klebebänder werden in der Automobilindustrie eingesetzt, um Kabel bei der Kabelsatzherstellung zu bündeln. Hier gibt es viele verschiedene Ansätze, um den spezifischen Anforderungen zu genügen. So kommt es bei derartigen Klebebändern unter anderem darauf an, diese unempfindlich gegenüber Kraftstoffen, Ölen oder vergleichbaren chemischen Medien zu gestalten. Darüber hinaus will man mit solchen Klebebändern z. B. die Geräuschentwicklung eines Kabelsatzes in der Kraftfahrzeugkarosserie positiv beeinflussen. Tatsächlich besteht hier das Problem, Klappergeräusche möglichst effektiv akustisch zu dämpfen.

Um solche Klappergeräusche wirksam zu vermindern oder ganz auszuschließen, wird im Stand der Technik nach der DE 298 23 462 U1 eine Schutzummantelung für langgestreckte Objekte vorgestellt, welche sich aus zwei textilen Schichten zusammensetzt. Dabei ist zum zu schützenden Objekt hin eine erste textile Schicht vorhanden, die aus einem Synthetikfaservlies ausgebildet ist. Nach außen wird eine zweite textile Schicht platziert, die aus einem zweibarrigen Wirkwarenvelours mit nach außen weisend angeordneten Veloursschlingen ausgebildet ist. Beide textilen Schichten sind zumindest stellen- bzw. teilbereichsweise miteinander verklebt.

Die bekannte Schutzummantelung mag zwar für eine wirksame Geräuschdämpfung sorgen, zeigt jedoch eine ausgeprägte Schmutzempfindlichkeit. Außerdem werden in Kraftfahrzeug teilweise vorhandene Medien, wie z.B. Öl, Kraftstoffe, aufgesogen. Diese beeinträchtigen den damit hergestellten Kabelsatz nicht nur optisch, sondern können auch zu technischen Nachteilen führen. Denn sofern beispielsweise Kraftstoffe bis in die Kleberbeschichtung migrieren, wird dessen Wirkung nachteilig beeinflusst. Auch Kabelisolierungen können durch das dauerhafte Einwirken von Kraftstoffen und ggf. anderen Medien bis hin zum Kurzschluss geschädigt werden.

Der Stand der Technik macht deutlich, dass (einschichtige) textile Flächengebilde aus Vlies oder Velours zwar hohe Geräuschdämpfungswerte zeigen, allerdings nur mit einer geringen mechanischen Stabilität ausgerüstet sind. Aus diesem Grund greift man auf den beschriebenen zweischichtigen Aufbau zurück, weil Klebebänder mit einem Träger aus einzig einer Flächengebildeschicht aus Fasern unter Zugbelastung reißen können oder bei der Verarbeitung zur Überdehnung neigen. Außerdem können sich solche Klebebänder an scharfen Kanten durchscheuern, was zur anschließenden Beschädigung des Kabelsatzes führt.

Diesem Problem ist die DE 298 23 462 U1 zwar insofern entgegengetreten, als hier ein Verbundband aus Vlies und Velours vorgestellt wird. Beide Materialien sind jedoch sehr saugfähig und schmutzempfindlich, so dass die einleitend beschriebenen Probleme unverändert auftreten. Außerdem stellt sich die Herstellung kostenaufwendig dar, was bei dem heutzutage vorliegenden Kostendruck in der Automobilindustrie besonders nachteilig ist.

Im Stand der Technik entsprechend der DE 699 02 802 T2 wird ein handeinreißbares Band vorgestellt, welches auf einen Laminat-Verbundkörper zurückgreift. Dieser setzt sich aus einer Faservlieslagenschicht und einer zu dieser benachbarten Grobgewebeschicht zusammen. Die Grobgewebeschicht weist in Maschinenrichtung und Querrichtung maximal 50 Fäden/2,5 cm auf. Dadurch will man die geforderte Handeinreißbarkeit auf jeden Fall gewährleisten.

Im Rahmen der US 6 790 505 B1 wird ein Klebeband beschrieben, welches sich zum Umwickeln von Kabelbündeln in Automobilen eignet. Das bekannte Klebeband greift einzig auf einen Träger aus einem Gewebe zurück.

Der Erfindung liegt das technische Problem zugrunde, ein gattungsgemäßes Klebeband so weiterzuentwickeln, dass bei kostengünstigem Aufbau die widerstreitenden Anforderungen der Medienbeständigkeit, Schmutzunempfindlichkeit und gleichzeitig guten mechanische Stabilität sowie Geräuschdämpfung insgesamt erfüllt werden.

Zur Lösung dieser technischen Problemstellung ist Gegenstand der Erfindung die Verwendung eines Klebebandes mit wenigstens einem textilen Träger aus zumindest einer Gewebeschicht und einer damit verbundenen Flächengebildeschicht, nach Anspruch 1.

Insgesamt basiert die Erfindung also auf einem textilen Träger aus einem Laminat aus der Flächengebildeschicht und der Gewebeschicht. Bei diesen beiden Schichten handelt es sich also jeweils um textile Flächengebilde, also solche Gebilde, die aus Fasem bzw. Faserstoffen hergestellt sind. Die Flächengebildeschicht ist als Faservlieslagenschicht, insbesondere Nadelvliesschicht, ausgebildet. Ein solcher Nadelvlies ist **dadurch gekennzeichnet, dass** zu seiner Verdichtung und Verfestigung mit sogenannten Vemadelungsmaschinen gearbeitet wird, welche den Vlies mit Nadeln durchdringen und so zu einer Faserverschlingung und damit Verfestigung führen.

Von besonderer Bedeutung ist nämlich der Umstand, dass die Gewebeschicht mit der beanspruchten Mindestanzahl von Fäden und deren Feinheit ein dichtes, nahezu geschlossenes und vorzugsweise glattes Gewebe zur Verfügung stellt. Dabei ist die Gewebeschicht nach außen weisend auf dem zu ummantelnden Kabelbündel angeordnet. Demgegenüber wird die Kleberbeschichtung auf die nach innen weisende Flächengebildeschicht vollflächig oder bereichsweise aufgebracht.

Die nach außen weisende dichte und nach vorteilhafter Ausgestaltung zudem mit einer glatt geschliffenen Oberfläche ausgerüstete Gewebeschicht stellt sicher, dass von außen auf das Klebeband aufgebrachte aggressive Medien, wie Öl, Kraftstoff etc., praktisch nicht in die Oberfläche eindringen können. Tatsächlich sorgt die Anzahl von mehr als 25 Fäden/cm in Längs- und Querrichtung in Verbindung mit der Fadenfeinheit von 30 bis 180 denier dafür, dass beispielsweise Tröpfchen des betreffenden Mediums auf der Gewebeschicht verbleiben und nicht in die Poren des Gewebes eindringen können. Bekanntermaßen drückt die geforderte Faserfeinheit von 30 bis 180 denier aus, dass die Fäden insofern ein Gewicht von 30 bis 180 g je 9.000 m Lauflänge aufweisen. Das entspricht ca. 33 dtex bis 200 dtex.

Sofern zusätzlich noch die Gewebeschicht eine glatt geschliffene, insbesondere gechintzte, Oberfläche aufweist, wird dieser Effekt verstärkt. Einzelheiten eines solchen geeigneten Gewebes bzw. einer zugehörigen Gewebeschicht werden in der WO 03/033611 A1 beschrieben, auf die ausdrücklich Bezug genommen wird.

Da die Kleberbeschichtung bzw. Klebstoffbeschichtung auf die nach innen weisende Flächengebildeschicht vollflächig oder bereichsweise aufgebracht wird, besteht die Möglichkeit, das Klebeband spiralförmig um ein Kabelbündel zur Herstellung eines Kabelsatzes für ein Automobil herumzuwickeln. Zu diesem Zweck mag die Kleberbeschichtung zumindest bereichsweise auf eine Kleberseite bzw. Klebstoffseite des Trägers aufgebracht werden, und zwar größtenteils senkrecht zur Wickelrichtung. Zusätzliche und optionale Perforationen oder vergleichbare Materialschwächungen im Träger stellen in diesem Zusammenhang und auch ansonsten sicher, dass sich das Klebeband insgesamt handeinreißen lässt oder dieses Handeinreißen erleichtert wird. Meistens wird die Kleberbeschichtung längsrandseitig auf den Träger aufgebracht, und zwar entlang beider Längsränder. Die Perforationen verlaufen demgegenüber in Querrichtung, so dass der Abstand der Perforationen die Länge der solchermaßen erzeugten Schutzummantelung vorgibt.

Schließlich schlägt die Erfindung vor, die Kleberbeschichtung mit einem Flächengewicht von 30 bis 200 g/m², vorzugsweise 50 bis 130 g/m² aufzubringen, wohingegen für die Gewebeschicht Flächengewichte von 30 bis 200 g/m² und für die Flächengebildeschicht solche von 50 bis 300 g/m² vorgesehen werden. - Zur Verbindung der Gewebeschicht und der Flächengebildeschicht kann auf verschiedenste Vorgehensweisen zurückgegriffen werden. Beispielsweise lässt sich die Gewebeschicht mit einem Klebstoff belegen und anschließend mit der Flächengebildeschicht, nämlich der Faservlieslagenschicht aus vorzugsweise Polyester kaschieren. Abschließend findet dann die eigentliche Kleberbeschichtung vorzugsweise auf der Flächengebildeschicht statt.

Es ist aber auch möglich, mit einer sogenannten Flammkaschierung zu arbeiten. Dabei wird eine Schicht des Trägers, beispielsweise die Flächengebildeschicht, angeschmolzen und anschließend die Gewebeschicht aufkaschiert (oder umgekehrt). Ebenso kann mit einer Ultraschallverschweißung gearbeitet werden.

Im Ergebnis wird ein Klebeband zur Verfügung gestellt, welches sich zum Umwickeln von Kabeln bei der Herstellung von Kabelsätzen in Automobilen eignet. Dabei stellt die Gewebeschicht sicher, dass aggressive Medien nur erschwert in das Klebeband bzw. überhaupt nicht eindringen können, vielmehr an der Oberfläche verbleiben. Ebenso sorgt die vorzugsweise glatt geschliffene Gewebeschicht durch ihr Feingewebe dafür, dass Schmutz nicht dauerhaft anhaften bleibt bzw. nicht ins Innere des Klebebandes vordringen kann.

Mit Hilfe der mit der Gewebeschicht verbundenen Flächengebildeschicht wird die gewünschte Geräuschdämpfung erreicht. Tatsächlich wirkt die Flächengebildeschicht gleichsam wie ein Puffer und verhindert erfolgreich Klappergeräusche beispielsweise im Motorinnenraum.

Darüber hinaus verfügt das Klebeband über eine besondere Elastizität gegenüber einwirkenden Abriebkräften, weil die Gewebeschicht in Verbindung mit der nachgiebigen Flächengebildeschicht etwaigen auftretenden Druck bzw. Scheuerdruck gleichmäßig verteilt. Zugleich sorgt die Gewebeschicht für eine erhöhte Abriebfestigkeit, so dass auch Scheuerbeanspruchungen nicht zu einer Beschädigung des Klebebandes führen. Dabei mag das Klebeband insgesamt handeinreißbar ausgeführt werden, wenngleich in der Regel ein Zuschnitt erforderlich ist.

Im Folgenden wird die Erfindung anhand einer lediglich ein Ausführungsbeispiel darstellenden Zeichnung näher erläutert; es zeigen:
- Fig. 1: ein mögliches Verfahren zur Herstellung des erfindungsgemäßen Klebebandes und
- Fig. 2: das Klebeband nach der Erfindung schematisch sowie zugehörige und damit zu bündelnde Kabel.

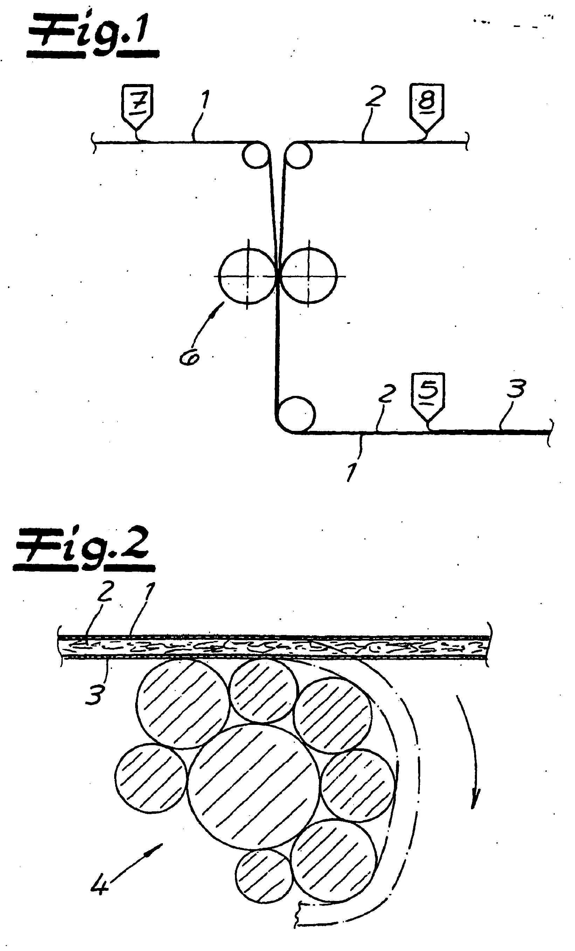

In der Fig. 2 ist ein Klebeband dargestellt, welches über einen textilen Träger 1, 2 und eine auf den Träger 1, 2 aufgebrachte Kleberbeschichtung 3 verfügt. Der Träger 1, 2 setzt sich aus einer Gewebeschicht 1 und einer damit verbundenen Flächengebildeschicht 2 aus jeweils Fasern zusammen. Im Vergleich zu einem mit Hilfe des Klebebandes zu umwickelnden Kabelbündel 4 findet sich die Gewebeschicht 1 nach außen weisend, während die Flächengebildeschicht 2 innenseitig angeordnet ist.

Die Kleberbeschichtung 3 ist innenseitig auf den Träger 1, 2 bzw. die innenliegende Flächengebildeschicht 2 aufgetragen, und zwar vollflächig. Grundsätzlich kann die Kleberbeschichtung 3 auf den Träger 1, 2 aber auch nur bereichsweise aufgebracht werden. Ebenso liegt es im Rahmen der Erfindung, zusätzlich eine Kleberbeschichtung 3 auf der anderen Seite des Trägers 1, 2, das heißt auf der Gewebeschicht 1, vorzusehen. Das ist jedoch nicht dargestellt.

Von besonderer Bedeutung für die Erfindung ist nun, dass die Gewebeschicht 1 als Feingewebeschicht mit mehr als 25 Fäden/cm in Längs- und Querrichtung ausgebildet ist. Tatsächlich handelt es sich bei der Gewebeschicht 1 um eine solche aus vorzugsweise Polyester, welche über eine glattgeschliffene Oberfläche, insbesondere eine gechintzte Oberfläche, verfügt. Dabei liegt die Gewebeschicht 1 in einer Materialdicke von 0,06 bis 0,5 mm, vorzugsweise 0,06 mm bis 0,3 mm, insbesondere 0,15 mm bis 0,2 mm vor. Darüber hinaus kann das Gewebe auch aus unterschiedlichen Fäden, beispielsweise Polyester/Baumwolle ausgeführt sein, um die bereits angesprochene Handeinreißbarkeit zu erreichen.

Um die beschriebene glattgeschliffene Oberfläche der Gewebeschicht 1 zu erzielen, durchläuft die Gewebeschicht 1 nach ihrer Herstellung eine Fuge eines Kalanders zwischen einer beheizten harten Stahlwalze und einer weichen Gegenwalze. Die glattzuschleifende Oberfläche der Gewebeschicht 1 liegt dabei an der beheizten Stahlwalze an, welche mit deutlich höherer Umfanggeschwindigkeit im Vergleich zu der weichen Gegenwalze läuft und so schleifend arbeitet und für den gewünschten Glattschliff sorgt.

Das Gewebe verfügt über eine Garnfeinheit von 30 bis 180 denier, wobei diese Garnfeinheit vorzugsweise bei 150 denier liegt.

Das Flächengewicht der Gewebeschicht 1 ist im Bereich von 30 bis 200 g/m² angesiedelt. Das Flächengewicht der Flächengebildeschicht liegt im Bereich zwischen 50 g/m² und 300 g/m². Bei dem Flächengebilde handelt es sich um ein Faservlies, insbesondere Nadelvlies, wobei die Flächengebildeschicht 2 im Rahmen des Ausführungsbeispiels als Nadelvliesschicht ausgeführt ist.

Die Kleberbeschichtung 3 wird mit einem Flächengewicht von 30 bis 200 g/m², vorzugsweise 50 bis 130 g/m², aufgetragen. Hierbei können Schmelzhaftklebstoffe auf Synthese- und/oder Naturkautschukbasis eingesetzt werden. Ebenso solche auf Acrylatbasis. Die Klebstoffe können nach der Beschichtung z. B. strahlenchemisch vernetzt werden, oder aber auch unvernetzt vorliegen. Neben solchen Schmelzklebstoffen lassen sich auch Klebstoffe in Pulverform, Dispersionsklebstoffe, Klebstoffe auf Lösemittelbasis etc. verwenden.

Zur Aufbringung des Klebers empfiehlt die Erfindung eine sogenannte Direktbeschichtung auf Kontaktbasis, eine Transferbeschichtung oder ein sogenanntes kontaktloses Beschichtungsverfahren nach der "curtain coating"-Methode. Bei dieser Vorgehensweise kommt eine Klebemittelbeschichtungsvorrichtung 5 zum Einsatz, welche mit einer einen Klebevorhang erzeugenden Düse ausgerüstet ist. Dadurch, dass die Gewebeschicht 1 und die Flächengebildeschicht 2 zuvor miteinander verbunden worden sind und als Laminat ausgangsseitig einer Pressrollenvorrichtung 6 entsprechend der Fig. 1 zur Verfügung stehen, wird dieser "Klebevorhang" von dem Träger 1, 2 kontaktlos mitgenommen. Dadurch wird ein besonders sparsamer Auftrag des Klebers bei gleichzeitig hohen Haftwerten vermöglicht.

Zur Verbindung von einerseits der Gewebeschicht 1 und andererseits der Flächengebildeschicht 2 dienen zwei weitere Vorrichtungen 7, 8 zum Klebemittelauftrag einerseits auf die Gewebeschicht 1 und/oder andererseits die Flächengebildeschicht 2. Beide Schichten 1, 2 werden anschließend miteinander in der Pressrollenvorrichtung 6 vereinigt und stehen ausgangsseitig als Träger 1, 2 bzw. Laminatträger zur Verfügung. Wie schon zuvor bei der Klebemittelbeschichtungsvorrichtung 5 beschrieben, können sowohl die Vorrichtung 7 als auch die Vorrichtung 8 nach dem "curtain coating"-Verfahren arbeiten und ausgeführt werden, um einen dauerhaften Verbund der Schichten 1 und 2 bei Einsatz geringer Klebstoffmengen zu erzielen. Selbstverständlich werden auch die Direktbeschichtung auf Kontaktbasis und/oder eine Transferbeschichtung an dieser Stelle von der Erfindung umfasst.

Wie bereits erläutert, Kann die Gewebeschicht 1 über eine glattgeschliffene Oberfläche verbügen. Anstelle oder zusätzlich zu dieser glattgeschliffenen Oberfläche mag auf die Gewebeschicht 1 auch eine Appretur- und/oder Lackschicht aufgebracht werden. Darüber hinaus kann auch die Flächengebildeschicht 2 auf ihrer der Kleberbeschichtung 3 zugewandten Seiten mit einer solchen Appretur- und/oder Lackbeschichtung ausgerüstet werden. Das ist selbstverständlich nicht zwingend.

## Patentansprüche

1. Verwendung eines Klebebandes mit wenigstens einem textilen Träger (1, 2) aus zumindest einer Gewebeschicht (1) und einer damit verbundenen sowie als Faservlieslagenschicht ausgebildeten Flächengebildeschicht (2), und mit einer ein- oder beidseitig auf den Träger (1, 2) aufgebrachten Kleberbeschichtung (3), zum Umwickeln eines Kabelbündels (4) bei der Herstellung von Kabelsätzen in Automobilen, wobei
- die Gewebeschicht (1) als Feingewebeschicht mit mehr als 25 Fäden/cm in Längs- und Querrichtung ausgebildet ist, wobei ferner
- die Feinheit der Fäden der Gewebeschicht (1) im Bereich von 30 bis 180 denier angesiedelt ist, wobei weiter
- die Gewebeschicht (1) nach außen weisend auf dem zu ummantelnden Kabelbündel (4) angeordnet ist, wobei
- die Kleberbeschichtung (3) auf die nach innen weisende Flächengebildeschicht (2) vollflächig oder bereichsweise aufgebracht ist, und wobei
- das Flächengewicht der Gewebeschicht (1) im Bereich von 30 bis 200 g/m², und
- das Flächengewicht der Flächengebildeschicht (2) im Bereich von 50 bis 300 g/m² angesiedelt ist.

2. Verwendung nach Anspruch 1, **dadurch gekennzeichnet, dass** die Flächengebildeschicht (2) als Nadelvliesschicht ausgeführt ist.

3. Verwendung nach Anspruch 1 oder 2, **dadurch gekennzeichnet, dass** der Träger (1, 2) Perforationen oder vergleichbare Materialschwächungen aufweist, um ein Handeinreißen zu erleichtern bzw. zu ermöglichen.

4. Verwendung nach einem der Ansprüche 1 bis 3, **dadurch gekennzeichnet, dass** die Gewebeschicht (1) eine glattgeschliffene, insbesondere gechintzte, Oberfläche aufweist.

5. Verwendung nach einem der Ansprüche 1 bis 4, **dadurch gekennzeichnet, dass** die Kleberbeschichtung ein Flächengewicht von 30 bis 280 g/m², vorzugsweise 50 bis 130 g/m², aufweist.

## Claims

1. An application of an adhesive tape with at least one textile substrate (1, 2) of at least one woven fabric layer (1) and one non-woven fabric layer (2) that is connected to the former, and is designed as a non-woven fibre web layer, and with an adhesive coating (3) applied to the substrate (1, 2) on one or both sides, for purposes of wrapping a cable bundle (4) in the manufacture of cable looms in cars, wherein
the woven fabric layer (1) is designed as a fine woven fabric layer with more than 25 threads/cm in the lengthwise and crosswise directions, wherein further
the fineness of the threads of the woven fabric layer (1) is located in the range from 30 to 180 denier, wherein further
the woven fabric layer (1) is arranged outwardly directed on the cable bundle (4) to be wrapped, wherein
the adhesive coating (3) is applied to the inwardly directed non-woven fabric layer (2) over the full surface area or in regions, and wherein
the mass per unit area of the woven fabric layer (1) is located in the range from 30 to 200 g/m², and the mass per unit area of the non-woven fabric layer (2) is located in the range from 50 to 300 g/m².

2. The application in accordance with claim 1,
**characterised in that**,
the non-woven fabric layer (2) is embodied as a needle-punched non-woven layer.

3. The application in accordance with claim 1 or 2,
**characterised in that**,
the substrate (1, 2) has perforations or comparable material weaknesses, in order to ease or make possible manual tearing.

4. The application in accordance with one of the claims 1 to 3,
**characterised in that**,
the woven fabric layer (1) has a smoothed surface, in particular a chintzed surface.

5. The application in accordance with one of the claims 1 to 4,
**characterised in that**,
the adhesive coating has a mass per unit area of 30 to 280 g/m², preferably 50 to 130 g/m².

## Revendications

1. Utilisation d'un ruban adhésif comportant au moins un support textile (1, 2) composé d'au moins une couche de textile (1) et d'une couche de structure superficielle qui lui est raccordée et est composée d'une couche de non-tissé fibreux (2), et comportant un revêtement collant (3) appliqué sur un ou sur les deux côtés du support (1, 2) pour enrober un faisceau de câbles (4) lors de la fabrication de jeux de câbles dans les automobiles, dans laquelle
- la couche de textile (1) est réalisée sous forme d'une couche de textile fin présentant plus de 25 fils/cm dans le sens longitudinal et transversal, sachant que, en outre,
- la couche de textile (1) est disposée tournée vers l'extérieur sur le faisceau de câbles à enrober (4),
- le revêtement collant (3) est appliqué sur toute la surface ou par endroits sur la couche de structure superficielle tournée vers l'intérieur (2), et
- le grammage de la couche de textile (1) est de l'ordre de 30 à 200 g/m², et
- le grammage de la couche de structures superficielles (2) se situe dans la plage de 50 à 300 g/m².

2. Utilisation selon la revendication 1, **caractérisée en ce que** la couche de structure superficielle (2) est réalisée sous forme de non-tissé aiguilleté.

3. Utilisation selon la revendication 1 ou 2, **caractérisée en ce que** le support (1, 2) présente des perforations ou des fragilisations comparables pour faciliter ou permettre un déchirement à la main.

4. Utilisation selon une des revendications 1 à 3, **caractérisée en ce que** la couche collante (1) présente une surface polie lisse, en particulier rectifiée.

5. Utilisation selon une des revendications 1 à 4, **caractérisée en ce que** le revêtement collant présente un grammage de 30 à 280 g/m², de préférence 50 à 130 g/m².
